# EUROPEAN PATENT SPECIFICATION

(11) **EP 4 053 707 B1**
(45) Date of publication and mention of the grant of the patent: **30.07.2025**
(21) Application number: 20887274.7
(22) Date of filing: 02.11.2020
(51) Int. Cl.: G06F 13/10, G06F 13/40, G06F 1/16, G06F 1/26, G06F 3/01

(54) **ELECTRONIC DEVICE, AND ELECTRONIC DEVICE INTERFACE CONTROL METHOD AND SYSTEM**
ELEKTRONISCHE VORRICHTUNG SOWIE VERFAHREN UND SYSTEM ZUR STEUERUNG DER SCHNITTSTELLE EINER ELEKTRONISCHEN VORRICHTUNG
DISPOSITIF ÉLECTRONIQUE, ET PROCÉDÉ ET SYSTÈME DE COMMANDE D'INTERFACE DE DISPOSITIF ÉLECTRONIQUE

(30) Priority: 13.11.2019 CN 201911106776
(43) Date of publication of application: 07.09.2022
(73) Proprietor: GUANGDONG OPPO MOBILE TELECOMMUNICATIONS CORP., LTD., Dongguan, Guangdong 523860 (CN)
(72) Inventor: YANG, Dongsun, Dongguan, Guangdong 523860 (CN)
(74) Representative: Mewburn Ellis LLP
(86) International application number: PCT/CN2020/125976
(87) International publication number: WO 2021/093627

(56) References cited:
- EP-A1- 3 327 580
- EP-A1- 3 454 223
- WO-A1-2019/168291
- CN-A- 105 549 708
- CN-A- 110 309 094
- CN-A- 110 879 792
- US-A1- 2017 277 650

## Description

### TECHNICAL FIELD

This disclosure relates to the field of electronic devices, and particularly to an electronic device, an interface control method of an electronic device, and an interface control system of an electronic device.

### BACKGROUND

For some existing electronic devices (*e.g*., augmented reality (AR) glasses, AR helmets, and other augmented reality devices) that need to be coupled with a host device (*e.g.,* a smart phone, and a dedicated server) through an interface (*e.g.,* a USB interface), after the electronic device is coupled with the host device, generally, the host device serves as a master device (*e.g.,* a USB host) while the electronic device serves as a slave device (*e.g., a* USB slave), and the host device supplies power to the electronic device. In this situation, both the host device and the electronic device are powered by a battery of the host device. Since both the host device and the electronic device generally have only one interface, after the interface is occupied, the electronic device can only be charged through the host device, and the host device, however, cannot be charged, which shortens a battery life of the electronic device and reduces user experience.

WO 2019/168291 A1 relates to an electronic device. The electronic device includes: a first interface; a second interface; an input device; and a processor functionally connected to the first interface, the second interface, and the input device, wherein the processor can be configured to receive power from the first external electronic device through the first interface in a state in which the first external electronic device is connected to the first interface and a second external electronic device is connected to the second interface, and to receive power from the second external electronic device through the second interface when

EP 3454223 A1 relates to a head-mounted display system. The head-mounted display system includes a head-mounted display gear, a host, and two USB Type-C transmission lines. The two USB Type-C transmission lines are coupled between the head-mounted display gear and the host for transmitting power, data, and video streams.

US 2017/277650 A1 relates to user equipment. The user equipment includes: a USB Type-C interface, a USB physical layer, an audio codec, and an analog switch device. A left channel terminal and a right channel terminal of the audio codec and a data transmission terminal of the USB physical layer multiplex D+ and D- pins of the USB Type-C interface. The first analog switch device is configured to, when detecting that an analog audio cable is inserted into the USB Type-C interface, switch the D+ and D- pins of the USB Type-C interface to connect the left channel terminal and the right channel terminal of the audio codec, respectively.

### SUMMARY

Aspects of the invention are set out in the appended claims. Implementations discussed herein provide an electronic device and an interface control method thereof, and an interface control system of an electronic device, which can solve the problem in the related art that the electronic device can only be powered by a host device when the electronic device is coupled with the host device.

In the disclosure, the name of a device, such as a wireless communication terminal and a positioning system, does not limit the device itself. In an actual implementation, these devices can have other names. As long as functions of respective devices are similar to those of the disclosure, these devices shall all fall within the scope of claims of the disclosure and its equivalent technology.

These and other aspects of the disclosure will become apparent from description of the following implementations.

### BRIEF DESCRIPTION OF THE DRAWINGS

FIG. 1 is a schematic block diagram illustrating an electronic device according to implementations of the disclosure.
FIG. 2 is a schematic block diagram illustrating another electronic device according to implementations of the disclosure.
FIG. 3A and FIG. 3B are schematic diagrams respectively illustrating controlled states of a first switch and a second switch when an electronic device is coupled with different devices according to implementations of the disclosure.
FIG. 4 is a schematic block diagram illustrating an electronic device according to implementations of the disclosure.
FIG. 5 is a schematic diagram illustrating augmented reality (AR) glasses according to implementations of the disclosure.
FIG. 6 is a schematic diagram illustrating a USB Type-C socket interface according to implementations of the disclosure.
FIG. 7 is a schematic diagram illustrating a data selection unit according to implementations of the disclosure.
FIG. 8 is a schematic diagram illustrating another data selection unit according to implementations of the disclosure.
FIG. 9 is a flowchart illustrating an interface control method of an electronic device according to implementations of the disclosure.
FIG. 10 is a flowchart illustrating another interface control method of an electronic device according to implementations of the disclosure.
FIG. 11 is a flowchart illustrating an interface control method of an electronic device according to implementations of the disclosure.
FIG. 12 is a flowchart illustrating yet another interface control method of an electronic device according to implementations of the disclosure.
FIG. 13 is a schematic block diagram illustrating an interface control system of an electronic device according to implementations of the disclosure.
FIG. 14 is a schematic block diagram illustrating an electronic device according to implementations of the disclosure.
FIG. 15 is a schematic diagram illustrating a computer storage medium according to implementations of the disclosure.

### DETAILED DESCRIPTION

Hereinafter, technical solutions of implementations of the disclosure will be described in a clear and comprehensive manner with reference to accompanying drawings intended for the implementations.

It should be understood that, an electronic device to which the technical solutions of the implementations of the disclosure can be applied may be an augmented reality (AR) device, for example, AR glasses, an AR helmet, etc.

In the related art, when an electronic device is coupled with a host device through an interface, the electronic device can only be powered by the host device and the host device cannot be charged due to occupation of a charging interface, which results in a relatively short battery life of the electronic device. Therefore, a method and a device are required, which can solve, at least to a certain extent, the problem in the related art that the electronic device can only be powered by the host device when the electronic device is coupled with the host device.

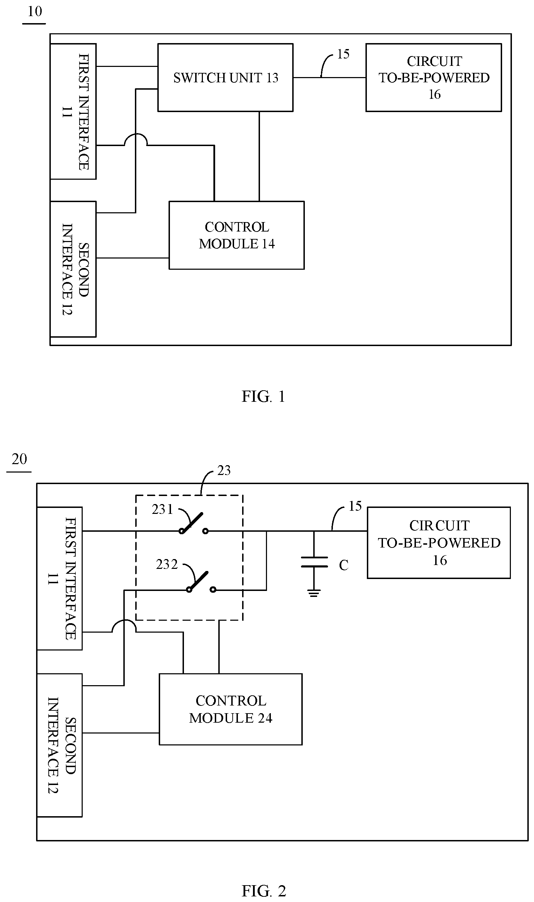

FIG. 1 is a block diagram illustrating an electronic device according to implementations of the disclosure. The electronic device may be used through a connection with a host device *(e.g.,* a smart terminal device, a dedicated server, etc.). The electronic device may be, for example, an AR device, such as AR glasses, an AR helmet, and the like.

As illustrated in FIG. 1, an electronic device 10 includes a first interface 11, a second interface 12, a switch unit 13, and a control module 14.

Optionally, in implementations of the disclosure, the first interface 11 and the second interface 12 may be, for example, a USB 2.0 interface, a Micro USB interface, a USB Type-C interface, or the like. In some implementations, the first interface 11 may also be a lightning interface, or any other type of parallel port or serial port that is capable of power supply/charging.

Specifically, the switch unit 13 is coupled with the first interface 11 and the second interface 12 respectively, and configured to switch a power-supply path 15 of the electronic device 10.

The power-supply path 15 is provided by the first interface 11 or the second interface 12. Power outputted by a device coupled with the first interface 11 or the second interface 12 is supplied to a circuit to-be-powered 16 of the electronic device 10 (*e.g.,* an application processor (AP), a display module, an image collection module, a sensor, etc.) through the power-supply path 15.

The control module 14 is coupled with the first interface 11, the second interface 12, and the switch unit 13 respectively, and configured to detect a type of a device coupled with the electronic device 10 through the first interface 11 and/or the second interface 12. The control module 14 is configured to control, based on the type of the device, the switch unit 13 to switch the power-supply path 15 of the electronic device 10.

The control module 14 may be, for example, a control chip or a microcontroller unit (MCU) that can fully or partially implement functions specified in a power delivery (PD) protocol. The control module 14 can recognize, based on the PD protocol, a type of a device coupled through the first interface and/or the second interface. In addition, the control module 14 can also negotiate, based on the PD protocol, a power-supply voltage, a current, a power-supply direction, and so on with the coupled device.

The control module 14 is further configured to control the switch unit 13 based on the recognized type, to control the power-supply path 15 of the electronic device 10.

Those skilled in the art should understand that, although two interfaces (the first interface 11 and the second interface 12) are taken as an example in FIG. 1, the electronic device of implementations of the disclosure may have more interfaces. The control module 14 can control the switch unit 13 to switch a power-supply circuit of the electronic device by detecting a type of a device coupled with the electronic device through these interfaces, to solve the technical problem in the related art that the electronic device can only be powered by a host device.

Therefore, when in use, the power-supply path of the electronic device of implementations of the disclosure varies with a type of a coupled device, which can solve the technical problem in the related art that the electronic device can only be powered by the host device, thereby prolonging a battery life of the electronic device when in use.

FIG. 2 is a block diagram illustrating another electronic device according to implementations of the disclosure.

As an alternative implementation, different from the electronic device 10 illustrated in FIG. 1, a switch unit 23 of an electronic device 20 includes a first switch 231 and a second switch 232. The first interface 11 is coupled with a circuit to-be-powered 16 of the electronic device 20 through the first switch 231. The second interface 12 is coupled with the circuit to-be-powered 16 through the second switch 232.

In addition, a capacitor C coupled with the first switch 231 and the second switch 232 is configured to maintain power supply when the power-supply path 15 is switched, which can prevent power failure of the electronic device 20.

Specifically, the first switch 231 and the second switch 232 may be, for example, controllable switches, such as controllable transistors, which is not limited in the disclosure.

A control module 24 is configured to control the first switch 231 and/or the second switch 232 to be turned on based on a detected type of a device coupled with the electronic device 20, to switch the power-supply path 15 of the electronic device 20.

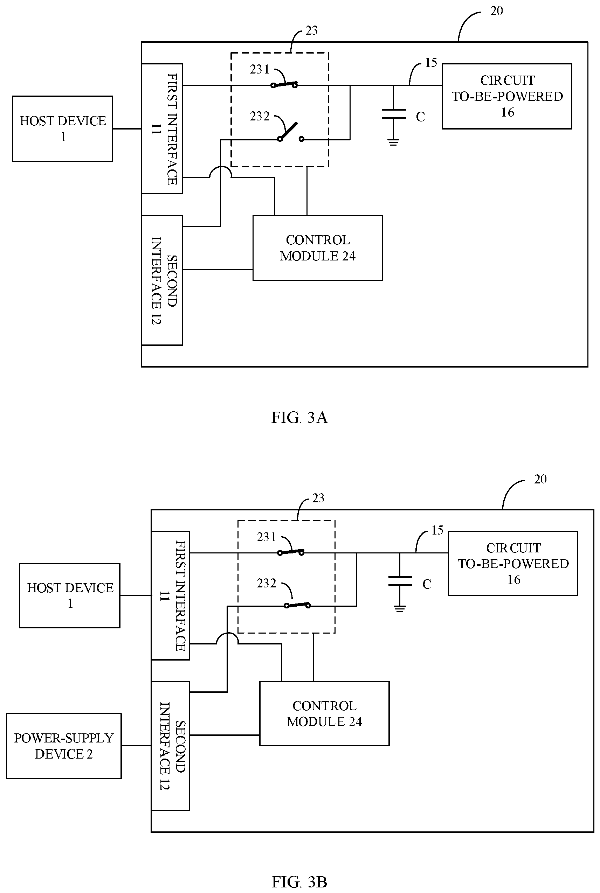

FIG. 3A and FIG. 3B are schematic diagrams exemplarily illustrating controlled states of the first switch and the second switch when the electronic device is coupled with different devices, respectively.

For example, as illustrated in FIG. 3A, upon detecting that the electronic device 20 is coupled with a device 1 which is a host only through the first interface 11, the control module 24 is configured to control the first switch 231 to be turned on and control the second switch 232 to be turned off, to allow the device 1 which is a host to supply power to the circuit to-be-powered 16.

As illustrated in FIG. 3B, upon detecting that the electronic device 20 is coupled with another device 2 through the idle second interface 12 and the device 2 is a power-supply device (*e.g.,* a power adapter), the control module 24 is further configured to control the second switch 232 to be turned on, to allow the power-supply device 2 to supply power to the circuit to-be-powered 16. As such, it is no longer necessary to power the electronic device through the device 1, thereby saving power of the host device 1.

Specifically, the control module 24 may also be configured to keep a state of the first switch 231 to be turned on, to allow power outputted by the power-supply device 2 to be supplied to the host device 1 through the first interface 11. That is, the host device 1 can be charged while the electronic device 20 is powered. As such, a battery life of the host device 1 can be further prolonged.

Those skilled in the art should understand that, FIG. 3A and FIG.3B only illustrate an example in which the first interface 11 is coupled with the device 1 which is a host and the second interface 12 is coupled with the power-supply device 2. Alternatively, the second interface 12 is coupled with the device 1 which is a host, and accordingly, the control module 24 is configured to control the second switch 232 to be turned on and control the first switch 231 to be turned off, to allow the device which is a host to supply power to the circuit to-be-powered 16 through the second interface 12. The first interface 11 is coupled with the power-supply device 2, and the first switch 231 is controlled to be turned on, to allow the power-supply device 2 to supply power to the circuit to-be-powered 16 through the first interface 11. Further, the second switch 232 is controlled to keep turned on, to allow power outputted by the power-supply device 2 to be supplied to the host device 1 through the second interface 12, to charge the host device 1 at the same time.

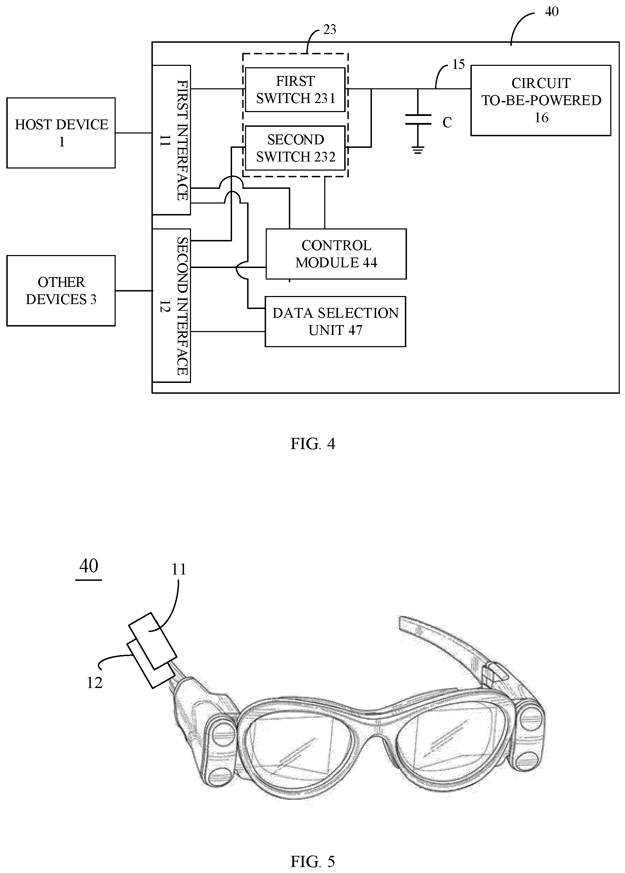

FIG. 4 is a block diagram illustrating yet another electronic device according to implementations of the disclosure.

As an alternative implementation, different from the electronic device 10 illustrated in FIG. 1 and the electronic device 20 illustrated in FIG. 2, an electronic device 40 illustrated in FIG. 4 further includes a data selection unit 47. The data selection unit 47 is coupled with the first interface 11 and the second interface 12 respectively, and configured to select to transmit data through the first interface 11 or the second interface 12 under control of a control module 44. As an example, data inputted at the first interface 11 or the second interface 12 is outputted to a module (*e.g*., an AP) of the electronic device 40, or data of the electronic device 40 is outputted to other devices (*e.g*., the host device 1) coupled with the electronic device 40 through the first interface 11 or the second interface 12.

In the following, for example, the electronic device 40 is AR glasses, and the first interface 11 and the second interface 12 are USB Type-C interfaces, how the data selection unit 47 selects, under control of the control module 44, an interface for data transmission with a coupled device is described.

Specifically, FIG. 5 is a schematic diagram exemplarily illustrating AR glasses according to implementations of the disclosure. As illustrated in FIG. 5, a first USB Type-C interface 11 and a second USB Type-C interface 12 are arranged on one temple of the AR glasses 40. However, it should be noted that, positions of the first interface 11 and the second interface 12 illustrated in FIG. 5 are merely exemplary and not intended to restrict the disclosure. As an example, the first interface 11 and the second interface 12 may also be arranged on two temples respectively.

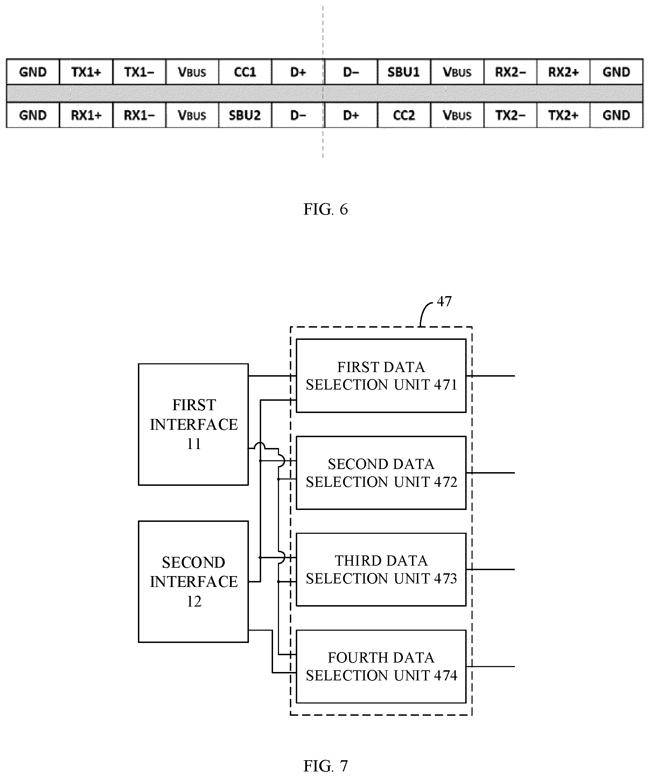

FIG. 6 is a schematic diagram exemplarily illustrating a USB Type-C socket interface. The USB Type-C interface supports forward insertion and reverse insertion. As illustrated in FIG. 6, ports in a USB Type-C interface structure are divided into two parts by a dotted line in FIG. 6. Arrangements of ports in the two parts are opposite to support forward and reverse insertion of a USB plug.

For forward insertion, ports TX1+, TX1-, RX1+, and RX1- provide two pairs of TX/RX differential lines, to support high-speed data transmission and reception that meets a USB 3.x protocol (*e.g*., USB 3.0, USB 3.1, etc.). For reverse insertion, ports TX2+, TX2-, RX2+, and RX2-provide two pairs of TX/RX differential lines, to support high-speed data transmission and reception that meets a USB 3 protocol (*e.g*., USB 3.0, USB 3.1, etc.).

Generally, for USB 3.1, only two pairs of TX/RX differential lines are used as data lines. As stated above, TX1/RX1 are connected in forward insertion, and TX2/RX2 are connected in reverse insertion. Therefore, in any case, two pairs of differential lines will not be used. A display port (DP) alternate mode is to load a DP signal onto two pairs of "remaining" differential lines, thus, USB 3 and DP can work simultaneously.

As an example, after the AR glasses 40 are coupled with the host device 1, USB TPYE-C interfaces of the host device 1 and the AR glasses 40 are required to support a USB 3 high-speed data transmission mode and the DP alternate mode. That is, DP signal transmission and USB 3 high-speed data transmission (including transmitting Tx and receiving Rx) at the USB Type-C interface are performed simultaneously. The AR glasses 40 are configured to drive an image collection module (*e.g.,* a camera) and other sensors of the AR glasses 40, and transmit data collected by the image collection module and the sensors to the host device 1 through two pairs of TX1/RX1 differential lines (take forward insertion as an example). The host device 1 is configured to perform operations such as image rendering on received data, and transmit a rendered picture to the AR glasses 40 through another two pairs of TX2/RX2 differential lines for display. As such, the USB 3 high-speed data transmission mode and the DP alternate mode can be supported at the same time.

Optionally, in implementations of the disclosure, referring to FIG. 6, the USB Type-C interface also supports four VBUSs and four GNDs to transmit power.

CC1 and CC2 ports are used for PD protocol communication. In case of forward insertion, a master device and a slave device communicate with each other through CC1. In case of reverse insertion, the master device and the slave device communicate with each other through CC2.

When a DP function is enabled, SBU1/SBU2 ports can be used to transmit side band (SB) data information of a device such as display port configuration data (DPCD), extended display identification data (EDID).

Two pairs of D+/D- data lines are configured for data transmission compatible with a USB 2 version.

Optionally, in implementations of the disclosure, FIG. 7 is a schematic diagram illustrating a data selection unit according to implementations of the disclosure. As illustrated in FIG. 7, a data selection unit 47 includes a first data selection unit 471, a second data selection unit 472, a third data selection unit 473, and a fourth data selection unit 474.

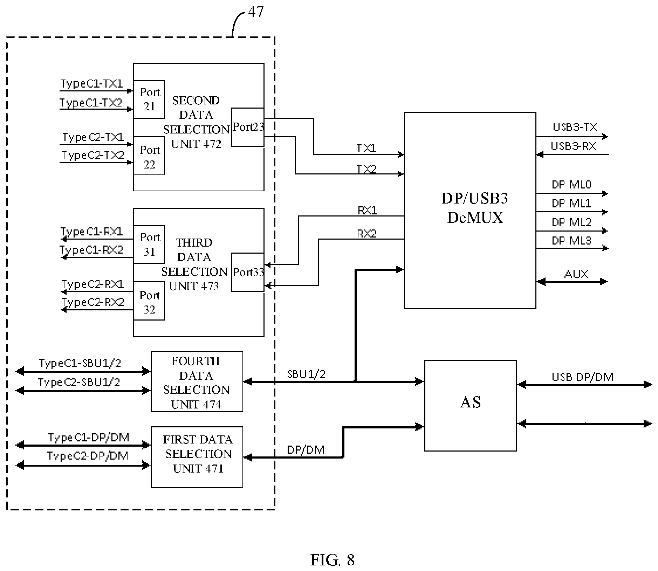

Optionally, in implementations of the disclosure, FIG. 8 is a schematic diagram exemplarily illustrating another data selection unit according to implementations of the disclosure.

The first data selection unit 471 may be, for example, coupled with D+/D- ports of the USB Type-C interface in FIG. 6, and configured to select to transmit data through D+/D- data lines of the first interface 11 or the second interface 12 under control of the control module 44. The first data selection unit 471 may be, for example, a controllable switch.

As illustrated in FIG. 8, the first data selection unit 471 is configured to select to transmit data with a coupled device through the first interface 11 or the second interface 12, such as data TYPEC1-DP/DM of the first interface 11, or data TYPEC2-DP/DM of the second interface 12. Data DP/DM selected is inputted to an audio switch (AS).

In the related art, a host device 1 (*e.g.,* a smart phone) may only have a USB Type-C interface for coupling with an audio output device (*e.g.,* an earphone, a speaker, etc.), and may have no conventional audio output device interface (*e.g.,* a 3.5 mm audio interface). Based on this, since the host device 1 is coupled with the electronic device 40 through the USB Type-C interface, audio data cannot be outputted through an audio output device (*e.g.,* an earphone, a speaker, etc.).

The above problem can be solved with the first data selection unit 471 of the electronic device 40.

Referring to FIG. 4 and FIG. 8, upon detecting that the electronic device 40 is coupled with a device 1 which is a host through the first interface 11 and coupled with an audio output device 3 (*e.g.,* an earphone, a speaker, etc.) through the second interface 12 (that is, other devices 3 in FIG. 4 are devices which are audio output devices), the control module 44 is configured to control the first data selection unit 471 to select to output audio data to the audio output device 3 through the second interface 12.

Optionally, in implementations of the disclosure, still exemplary, the electronic device 40 is AR glasses, the host device 1 is configured to transmit an image of a rendered picture and audio data of the rendered picture to the AR glasses 40 via the first interface 11 in the DP alternate mode through high-speed data transmission lines (TX/RX). The AR glasses 40 are configured to parse received data, extract audio data from the received data, and output audio data to the audio output device 3 through D+/D- data lines of the second interface 12. As such, an audio output device such as an earphone can still be used when the host device 1 without an independent earphone interface is coupled with the electronic device 40.

Those skilled in the art should understand that, FIG. 7 illustrates an example in which the electronic device is coupled with the host device 1 through the first interface 11 and coupled with the audio output device 3 through the second interface 12. However, the electronic device may also be coupled with the host device 1 through the second interface 12 and coupled with the audio output device 3 through the first interface 11. Accordingly, the control module 44 is configured to control the first data selection unit 471 to output audio data to the audio output device 3 through the first interface 11.

Specifically, the second data selection unit 472 may be, for example, coupled with TX1/TX2 ports of the USB Type-C interface in FIG. 6, and configured to select to transmit transmission data (TX) through data lines TX1/TX2 of the first interface 11 or the second interface 12 under control of the control module 44.

As illustrated in FIG. 8, the second data selection unit 472 includes a first port Port21, a second port Port22, and a third port Port23. As an example, the second data selection unit 472 is a controllable data selector *(e.g.,* a MUX). The data selector is generally configured to select any one of paths according to needs in multiplexed data transmission. As illustrated in FIG. 8, the second data selection unit 472 is configured to select to connect the first port Port21 with the third port Port23 or select to connect the second port Port22 with the third port Port23, to select to output TypeC1-TX1 and TypeC1-TX2 inputted at the first interface 11 or TypeC2-TX1 and TypeC2-TX2 inputted at the second interface 12 through the third port Port23, for example, output to a DP/USB3 demultiplexer (DeMUX).

Specifically, the third data selection unit 473 may be, for example, coupled with RX1/RX2 ports of the USB Type-C interface in FIG. 6, and configured to select to transmit reception data (RX) through data lines RX1/RX2 of the first interface 11 or the second interface 12 under control of the control module 44.

The third data selection unit 473 includes a first port Port31, a second port Port32, and a third port Port33. As an example, the third data selection unit 473 is a controllable data selector (*e.g.*, a MUX). As illustrated in FIG. 8, the third data selection unit 473 is configured to select to connect the first port Port31 with the third port Port33 or select to connect the second port Port32 with the third port Port33, to select to output data (RX1/RX2) outputted by a DP/USB3 DeMUX through the first interface 11 or the second interface 12 to an external device coupled with the third data selection unit 473, for example, output data (*e.g*., TypeC1-RX1 and TypeC1-RX2) through the first interface 11 or data *(e.g.,* TypeC2-RX1 and TypeC2-RX2) through the second interface 12 to the external device.

Still exemplary, the electronic device 40 is AR glasses, referring to FIG. 4 and FIG. 8, the electronic device 40 for example is coupled with a host device 1 through the first interface 11 and coupled with other devices 3 *(e.g.,* the above-mentioned audio output device or the above-mentioned power-supply device) through the second interface 12. When the host device 1 jointly transmits a rendered picture and audio data to the electronic device 40, the control module 44 is configured to control the second data selection unit 472 to communicate the first port Port21 with the third port Port23, and control the third data selection unit 473 to communicate the first port Port31 with the third port Port33, to transmit high-speed USB transmission data and high-speed USB reception data with the host device 1 through the first interface 11.

Specifically, the fourth data selection unit 474 may be, for example, coupled with SBU1/SBU2 ports of the USB Type-C interface in FIG. 6, and configured to select to transmit side band data through data lines SBU1/SBU2 of the first interface 11 or the second interface 12 under control of the control module 44. The fourth data selection unit 474 may be, for example, a controllable switch.

As illustrated in FIG. 8, the fourth data selection unit 474 is configured to select to transmit side band data at a USB Type-C interface with a coupled device through the first interface 11 or the second interface 12.

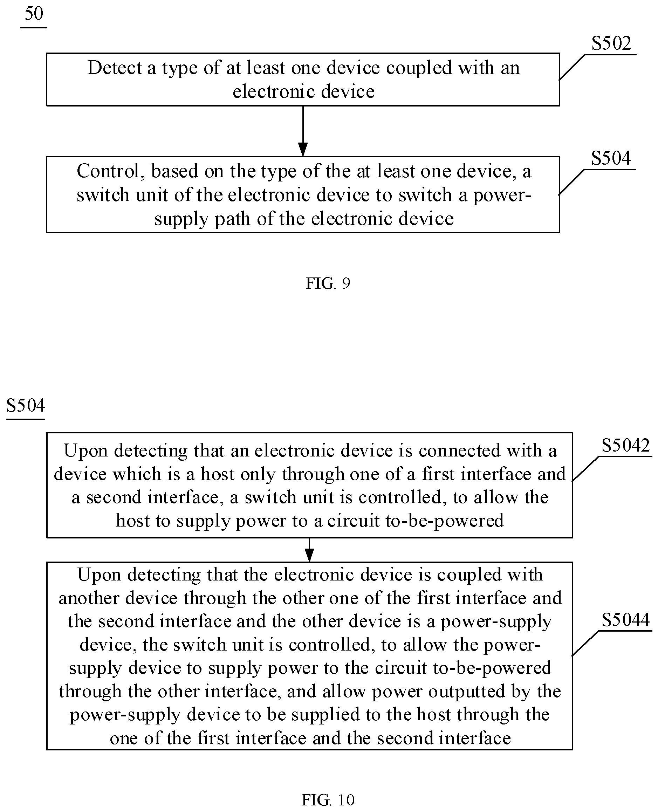

FIG. 9 is a schematic diagram illustrating an interface control method of an electronic device according to implementations of the disclosure. For details not disclosed in method implementations of the disclosure, reference may be made to the relevant implementations of the electronic device of the disclosure. As illustrated in FIG. 9, the method includes all or part of the following.

At S502, a type of at least one device coupled with the electronic device is detected.

The electronic device is coupled with the at least one device through all or part of at least two interfaces.

At S504, a switch unit of the electronic device is controlled based on the type of the at least one device to switch a power-supply path of the electronic device.

The at least two interfaces may include, for example, the first interface 11 and the second interface 12.

Specifically, by adopting the interface control method of the electronic device, the power-supply path of the electronic device with multiple interfaces (*e.g*., the first interface 11 and the second interface 12) varies with a type of a coupled device when the electronic device is in use, which can solve the technical problem in the related art that the electronic device can only be powered by a host device.

As an alternative implementation, FIG. 10 is a schematic diagram illustrating an interface control method of an electronic device according to implementations of the disclosure. Different from the method illustrated in FIG. 9, the method illustrated in FIG. 10 further provides a specific implementation of controlling, based on the type of the device, the switch unit of the electronic device to switch the power-supply path of the electronic device. That is, the method further provides a specific implementation of the operations at S504.

Specifically, as illustrated in FIG. 10, the operations at S504 include the following.

At S5042, upon detecting that the electronic device is coupled with the device which is a host only through one of the first interface and the second interface, the switch unit is controlled, to allow the host to supply power to a circuit to-be-powered.

At S5044, upon detecting that the electronic device is coupled with another device through the other one of the first interface and the second interface and the other device is a power-supply device, the switch unit is controlled, to allow the power-supply device to supply power to the circuit to-be-powered through the other interface, and allow power outputted by the power-supply device to be supplied to the host through the one of the first interface and the second interface.

By adopting the above method, the host device coupled with the electronic device can be charged while the electronic device is powered, thereby further prolonging the battery life of the host device 1.

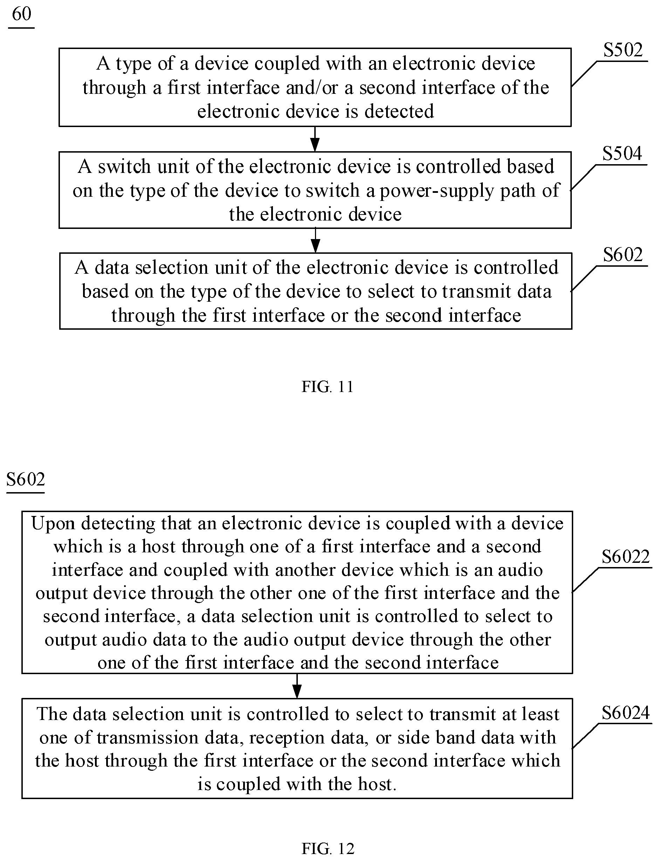

As an alternative implementation, FIG. 11 is a schematic diagram illustrating an interface control method of an electronic device according to implementations of the disclosure. As illustrated in FIG. 11, the method includes all or part of the following.

At S502, a type of a device coupled with the electronic device through a first interface and/or a second interface of the electronic device is detected.

At S504, a switch unit of the electronic device is controlled based on the type of the device to switch a power-supply path of the electronic device.

At S602, a data selection unit of the electronic device is controlled based on the type of the device to select to transmit data through the first interface or the second interface.

The difference from the method 50 illustrated in FIG. 9 is that the method 60 illustrated in FIG. 11 further includes the operations at S602. The first interface and the second interface may be, for example, USB Type-C interfaces.

As an alternative implementation, FIG. 12 is a schematic diagram illustrating an interface control method of an electronic device according to implementations of the disclosure. As illustrated in FIG. 12, the method includes all or part of the following.

At S6022, upon detecting that the electronic device is coupled with the device which is a host through one of the first interface and the second interface and coupled with another device which is an audio output device through the other one of the first interface and the second interface, the data selection unit is controlled to select to output audio data to the audio output device through the other one of the first interface and the second interface.

At S6024, the data selection unit is controlled to select to transmit at least one of transmission data, reception data, or side band data with the host through the first interface or the second interface which is coupled with the host.

Specifically, the difference from the method illustrated in FIG. 11 is that the method illustrated in FIG. 12 further provides a specific implementation of controlling, based on the type of the device, the data selection unit of the electronic device to select to transmit data through the first interface or the second interface. That is, a specific implementation of the operations at S602 is further provided.

Therefore, according to the interface control method of the electronic device of implementations of the disclosure, when in use, the power-supply path of the electronic device varies with a type of a coupled device, which can solve the technical problem in the related art that the electronic device can only be powered by a host device, thereby significantly prolonging the battery life of electronic device. In addition, when in use, the power-supply device that supplies power to the electronic device can also charge the host device through a connection interface between the electronic device and the host device, which can solve the problem that the host device cannot be charged when the electronic device is coupled with the host device, without adding a charging interface for the host device. Furthermore, when the electronic device is coupled with the host device, the electronic device can also be coupled with an audio output device such as an earphone through another interface of the electronic device, which can solve the problem that the audio output device cannot be used when the electronic device is coupled with the host device, without adding an independent earphone interface for the host device.

It should be understood that, the terms "system" and "network" herein are generally used interchangeably. The term "and/or" herein is merely used to describe the association of associated objects and indicates that there can be three relationships. For example, *"A* and/or *B"* may mean three situations, that is, *A* exists alone, *A* and *B* exist at the same time, and *B* exists alone. In addition, the character "/" herein generally indicates that the associated objects before and after the character are in an "or" relationship.

It should also be understood that, in various implementations of the disclosure, the size of sequence numbers of the above-mentioned processes does not mean an execution sequence. The execution sequence of the processes should be determined according to functions and an internal logic of the processes, which should not constitute any limitation on an implementation process of the implementations of the disclosure.

It should be noted that, the above accompanying drawings are merely used to schematically illustrate a process of the method according to exemplary implementations of the disclosure, rather than a restrictive purpose. It is easy to understand that, processes illustrated in the above accompanying drawings do not indicate or limit a chronological order of these processes. In addition, it is also readily understood that, these processes may be, for example, performed synchronously or asynchronously in multiple modules.

An interface control method of an electronic device of implementations of the disclosure has been described in detail above. In the following, an interface control system of an electronic device of implementations of the disclosure will be described with reference to accompanying drawings. The technical features described in the method implementations are applicable to system implementations below.

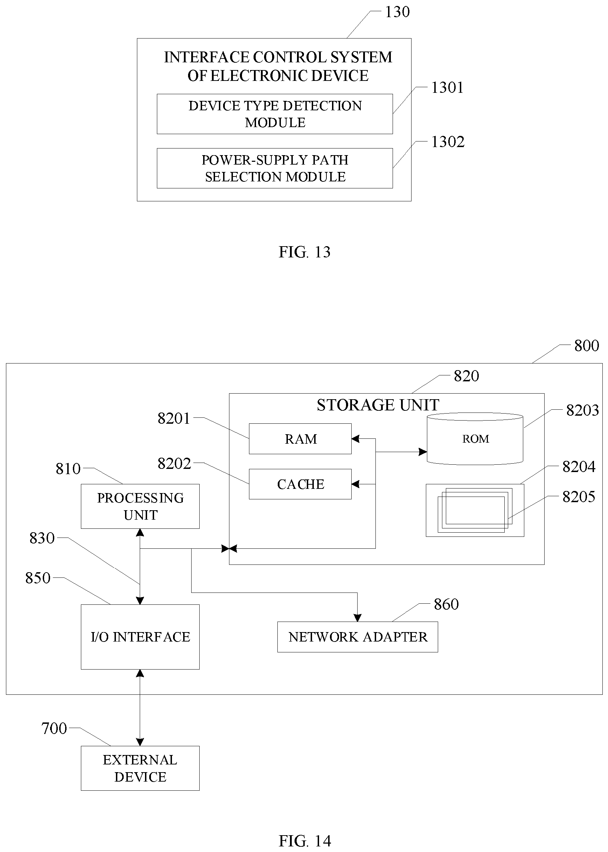

FIG. 13 is a schematic block diagram illustrating an interface control system 130 of an electronic device according to implementations of the disclosure. As illustrated in FIG. 13, the system 130 includes a device type detection module 1301 and a power-supply path selection module 1302. The device type detection module 1301 is configured to detect a type of at least one device coupled with the electronic device. The power-supply path selection module 1302 is configured to control, based on the type of the at least one device, a switch unit of the electronic device to switch a power-supply path of the electronic device. The electronic device is coupled with the at least one device through all or part of at least two interfaces.

Optionally, in implementations of the disclosure, the at least two interfaces include a first interface and a second interface. The power-supply path selection module 1302 is configured to control the switch unit to allow a host to supply power to a circuit to-be-powered, upon detecting that the electronic device is coupled with the device which is a host only through one of the first interface and the second interface.

Optionally, in implementations of the disclosure, the power-supply path selection module 1302 is configured to control the switch unit to allow a power-supply device to supply power to the circuit to-be-powered through the other one of the first interface and the second interface which is not coupled with the device which is a host, and allow the power outputted by the power-supply device to be supplied to the host through one of the first interface and the second interface, upon detecting that the electronic device is coupled with another device through the other interface and the other device is a power-supply device.

Optionally, in implementations of the disclosure, the system 130 further includes an interface selection module. The interface selection module is configured to control, based on the type of the at least one device, a data selection unit of the electronic device to select to transmit data through the first interface or the second interface.

Optionally, in implementations of the disclosure, the first interface and the second interface are each a USB Type-C interface.

Optionally, in implementations of the disclosure, the interface selection module is configured to control a first data selection unit to select to output audio data to an audio output device through the other one of the first interface and the second interface, upon detecting that the electronic device is coupled with the device which is a host through one of the first interface and the second interface and coupled with another device which is an audio output device through the other one of the first interface and the second interface.

Optionally, in implementations of the disclosure, the interface selection module is configured to control the data selection unit to select to transmit at least one of transmission data, reception data, or side band data with the host through the first interface or the second interface which is coupled with the host.

It should be understood that, modules, units, and other operations and/or functions in the system 130 of implementations of the disclosure are to respectively implement corresponding processes of the method described with reference to FIG. 9 to FIG. 12, which is not repeated herein for the sake of brevity.

FIG. 14 illustrates an electronic device 800 for implementing implementations of the disclosure according to implementations of the disclosure. The electronic device 800 illustrated in FIG. 14 is merely an example, and should not impose any limitations on the functions and the use scope of implementations of the disclosure. The electronic device may be an AR device such as AR glasses, an AR helmet, and the like.

As illustrated in FIG. 14, the electronic device 800 may be in a form of a general-purpose computing device. Components of the electronic device 800 may include, but are not limited to, at least one processing unit 810, at least one storage unit 820, and a bus 830 coupled with different system components (including the storage unit 820 and the processing unit 810).

The storage unit stores program codes. The program codes, when executed by the processing unit 810, are operable with the processing unit 810 to perform all or part of the operations of various exemplary implementations of the disclosure described in the above-mentioned "exemplary method" of the specification.

The storage unit 820 may include a readable medium in a form of a transitory storage unit, such as a random access memory (RAM) 8201 and/or a cache 8202. The storage unit 820 may further include a read-only memory (ROM) 8203.

The storage unit 820 may further include a program/utility 8204 having a set (at least one) of program modules 8205 including, but not limited to, an operating system, one or more application programs, other program modules, and program data. The implementation of a network environment may be included in each or some combination of these examples.

The bus 830 may be representative of one or more of several types of bus structures, including a memory bus or a memory controller, a peripheral bus, a graphics acceleration port, a processing unit, or a local bus using any of a variety of bus structures.

The electronic device 800 may also communicate with one or more external devices 700 (*e.g.,* a keyboard, a pointing device, a bluetooth device, etc.). The electronic device 800 may also communicate with one or more devices that allow a user to interact with the electronic device 800, and/or with any device (*e.g.,* a router, a modem, etc.) that allow the electronic device 800 to communicate with one or more other computing devices. Such communication may be performed through an input/output (I/O) interface 850. Also, the electronic device 800 may communicate with one or more networks (*e.g*., a local area network (LAN), a wide area network (WAN), and/or a public network such as the Internet) through a network adapter 860. As illustrated in FIG. 14, the network adapter 860 can communicate with other modules of the electronic device 800 via the bus 830. It should be understood that, although not illustrated, other hardware and/or software modules may be used in conjunction with the electronic device 800, and include but not limited to: a microcode, a device driver, a redundant processing unit, an external disk drive array, an RAID system, a tape drive, and a data backup storage system.

From the description of the above implementations, those skilled in the art can easily understand that, exemplary implementations described herein may be implemented by software or software combined with necessary hardware. Therefore, the technical solutions of the implementations of the disclosure may be embodied in a form of a software product. The software product may be stored in a non-transitory storage medium (which may be a CD-ROM, a USB, a mobile hard disk, etc.) or stored on a network, and include several instructions to cause a computing device (which may be a personal computer, a server, a terminal device, or a network device, etc.) to execute the method according to the implementations of the disclosure.

In exemplary implementations of the disclosure, a computer-readable storage medium is further provided. The computer-readable storage medium stores a program product capable of implementing the above method in the specification. In some possible implementations, various aspects of the disclosure may also be implemented in a form of a program product. The program product includes program codes. When the program product is run on a terminal device, the program codes cause the terminal device to perform the operations of various exemplary implementations of the disclosure described in the above-mentioned "exemplary method" of the specification.

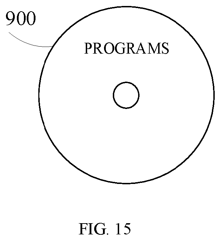

FIG. 15 illustrates a program product 900 for implementing the above method of implementations of the disclosure according to implementations of the disclosure. The program product may adopt a portable compact disk read-only memory (CD-ROM) and include program codes, and may run on a terminal device, such as a personal computer. However, the program product of the disclosure is not limited thereto, and in this document, a readable storage medium may be any tangible medium that contains or stores programs, the programs can be used by or in conjunction with an instruction execution system, an apparatus, or a device.

The program product may be any combination of one or more readable media. The readable medium may be a readable signal medium or a readable storage medium. For example, the readable storage medium may be, but not limited to, an electrical, magnetic, optical, electromagnetic, infrared, or semiconductor system, apparatus, or device, or a combination of any of the above. Specific examples (non-exhaustive list) of the readable storage medium include: an electrical connection with one or more wires, a portable disk, a hard disk, a RAM, a ROM, an erasable programmable read only memory (EPROM or flash memory), an optical fiber, a CD-ROM, an optical storage device, a magnetic storage device, or any suitable combination of the above.

A computer-readable signal medium may include a propagated data signal in baseband or as part of a carrier wave, which carries readable program codes. Such propagated data signal may take a variety of forms, including but not limited to, an electromagnetic signal, an optical signal, or any suitable combination of the foregoing. The readable signal medium may also be any readable medium other than the readable storage medium, and the storage medium can send, propagate, or transmit programs which can be used by or in connection with an instruction execution system, an apparatus, or a device.

Program codes embodied in a readable medium may be transmitted using any suitable medium, including but not limited to wireless, wireline, optical fiber cable, RF, etc., or any suitable combination of the foregoing.

The program codes used to perform the operations of the disclosure may be written in any combination of one or more programming languages. The programming languages may include object-oriented programming languages (e.g., Java, C++, etc.) and conventional procedural programming languages (*e*.*g*., C language or similar programming languages). The program codes may be executed entirely on a user's computing device, executed partly on the user's computing device, executed as an independent software package, executed partly on the user's computing device and partly on a remote computing device, or entirely on the remote computing device or on a server. In the case of a remote computing device, the remote computing device may be coupled with a user computing device through any kind of network (including a local area network (LAN) or a wide area network (WAN), etc.), or may be coupled with an external computing device (for example, by means of an Internet service provider for Internet connection).

It should be noted that, although several modules or units of the device for action execution are mentioned in the above detailed description, the division is not mandatory. In fact, according to the implementations of the disclosure, features and functions of two or more modules or units described above may be embodied in a module or unit. On the contrary, features and functions of a module or unit described above may be further divided to be embodied in multiple modules or units.

In addition, although various operations of the method of the disclosure are described in a particular order in accompanying drawings, which does not require or imply that these operations must be performed in the particular order, or that all the operations must be performed so as to achieve a desired result. Additionally or alternatively, some steps/operations may be omitted, multiple steps may be combined into one step for execution, and/or one step may be decomposed into multiple steps for execution, and so on.

From the description of the above implementations, those skilled in the art can easily understand that, exemplary implementations described herein may be implemented by software or software combined with necessary hardware. Therefore, the technical solutions of the implementations of the disclosure may be embodied in a form of a software product. The software product may be stored in a non-transitory storage medium (which may be a CD-ROM, a USB, a mobile hard disk, etc.) or stored on the network, and include several instructions to cause a computing device (which may be a personal computer, a server, a mobile terminal, or a network device, etc.) to execute the method according to the implementations of the disclosure.

Those skilled in the art should readily recognize that, in combination with exemplary units and algorithm steps or operations described in the implementations disclosed herein, the disclosure can be implemented by way of electronic hardware or a combination of computer software and electronic hardware. Whether a function is implemented by way of hardware or software depends on a particular application and design constraints of the technical solution. Those skilled in the art may use different methods to implement described functions for each particular application, but such implementation should not be considered as beyond the scope of the disclosure.

Those skilled in the art can clearly understand that, for the convenience and brevity of description, a specific working process of the system, the device, and units described above may refer to a corresponding process in the foregoing method implementations, which will not be repeated herein.

It should be understood that, the system, the device, and the method disclosed in implementations of the disclosure may be implemented in other manners. For example, the device/apparatus implementations described above are merely illustrative; for instance, the division of the unit is only a logical function division and there can be other manners of division during actual implementations, for example, multiple units or assemblies may be combined or may be integrated into another system, or some features may be ignored, omitted, or not performed. In addition, coupling or communication connection between each illustrated or discussed component may be direct coupling or communication connection, or may be indirect coupling or communication among devices or units via some interfaces, and may be electrical connection, mechanical connection, or other forms of connection.

The units described as separate components may or may not be physically separated, the components illustrated as units may or may not be physical units, that is, they may be in a same place or may be distributed to multiple network elements. All or part of the units may be selected according to actual needs to achieve the purpose of the technical solutions of the implementations.

In addition, the functional units in various implementations of the disclosure may be integrated into one processing unit, or each unit may be physically present, or two or more units may be integrated into one unit.

The functional unit may be stored in a computer-readable storage medium when it is implemented in the form of a software functional unit and is sold or used as a separate product. Based on such understanding, the technical solutions of the disclosure essentially, or part of the technical solutions that contribute to the related art, or all or part of the technical solutions, may be embodied in the form of a software product. The computer software product is stored in a storage medium and includes instructions for causing a computer device (which may be a personal computer, a server, or a network device, or the like) to perform all or part of the operations described in various implementations of the disclosure. The storage medium may include various medium capable of storing program codes, such as a universal serial bus (USB), a removable hard disk, a ROM, a RAM, Disk, compact disc (CD), or the like.

## Claims

1. An electronic device, comprising:
at least two interfaces;
a switch unit (13, 23) coupled with the at least two interfaces respectively and configured to switch a power-supply path (15) of the electronic device, the power-supply path being provided by one of the at least two interfaces; and
a control module (14, 24, 44) coupled with the at least two interfaces and the switch unit respectively, and configured to detect a type of at least one device coupled with the electronic device and control, based on the type of the at least one device, the switch unit to switch the power-supply path of the electronic device,
wherein the electronic device being coupled with the at least one device through all or part of the at least two interfaces,
wherein the at least two interfaces comprising a first interface (11) and a second interface (12), and
**characterized in that**:
the electronic device further comprises a data selection unit (47), and the data selection unit is coupled with the first interface and the second interface respectively and comprises a first data selection unit (471); and
the control module is configured to control the first data selection unit to select to output audio data from a host to an audio output device through the other one of the first interface and the second interface, in response to detecting that the electronic device is coupled with the device which is a host (1) through one of the first interface and the second interface and coupled with another device which is an audio output device through the other one of the first interface and the second interface.

2. The electronic device of claim 1, wherein the switch unit comprises a first switch (231) coupled with the first interface, a second switch (232) coupled with the second interface, and a capacitor (C) coupled with the first switch and the second switch; wherein the first interface is coupled with a circuit to-be-powered (16) of the electronic device through the first switch, and the second interface is coupled with the circuit to-be-powered through the second switch; the control module is configured to control, based on the type of the at least one device, the first switch or the second switch to be turned on to switch the power-supply path of the electronic device; the capacitor is configured to supply power to the electronic device when the control module switches the power-supply path of the electronic device.

3. The electronic device of claim 2, wherein the control module is configured to control the first switch or the second switch, which is coupled with one of the first interface and the second interface, to be turned on, in response to detecting that the electronic device is coupled with the device which is a host (1) only through the one of the first interface and the second interface, to allow the host to supply power to the circuit to-be-powered.

4. The electronic device of claim 3, wherein the control module is further configured to control the first switch or the second switch, which is coupled with the other one of the first interface and the second interface which is not coupled with the device which is a host, to be turned on, in response to detecting that the electronic device is coupled with another device through the other interface and the other device is a power-supply device (2), to allow the power-supply device to supply power to the circuit to-be-powered through the other interface and allow the power outputted by the power-supply device to be supplied to the host through the one of the first interface and the second interface.

5. The electronic device of claim 1, wherein the data selection unit is configured to select to transmit data through the first interface or the second interface under control of the control module.

6. The electronic device of claim 5, wherein the first interface and the second interface are each a USB Type-C interface.

7. The electronic device of claim 6, wherein the data selection unit further comprises:
a second data selection unit (472) configured to select to transmit transmission data at a USB Type-C interface through the first interface or the second interface;
a third data selection unit (473) configured to select to transmit reception data at the USB Type-C interface through the first interface or the second interface; and
a fourth data selection unit (474) configured to select to transmit side band data at the USB Type-C interface through the first interface or the second interface.

8. The electronic device of claim 7, wherein the second data selection unit and the third data selection unit are each a controllable data selector, and the fourth data selection unit is a controllable switch.

9. An interface control method of an electronic device, comprising:
detecting (S502) a type of at least one device coupled with the electronic device; and
controlling (S504), based on the type of the at least one device, a switch unit of the electronic device to switch a power-supply path of the electronic device,
wherein the electronic device is coupled with the at least one device through all or part of at least two interfaces, the at least two interfaces comprising a first interface and a second interface, and
**characterized in that** the method further comprises:
controlling a data selection unit of the electronic device to select to output audio data from a host to an audio output device through the other one of the first interface and the second interface, in response to detecting that the electronic device is coupled with the device which is a host (1) through one of the first interface and the second interface and coupled with another device which is an audio output device through the other one of the first interface and the second interface.

10. The method of claim 9, wherein controlling, based on the type of the at least one device, the switch unit of the electronic device to switch the power-supply path of the electronic device comprises:
controlling (S5042) the switch unit to allow a host to supply power to a circuit to-be-powered, in response to detecting that the electronic device is coupled with the device which is a host only through one of the first interface and the second interface.

11. The method of claim 10, wherein controlling, based on the type of the at least one device, the switch unit of the electronic device to switch the power-supply path of the electronic device further comprises:
controlling (S5042) the switch unit to allow a power-supply device to supply power to the circuit to-be-powered through the other one of the first interface and the second interface, which is not coupled with the device which is a host, and allow the power outputted by the power-supply device to be supplied to the host through the one of the first interface and the second interface, in response to detecting that the electronic device is coupled with another device through the other interface and the other device is a power-supply device.

12. The method of claim 10 or 11, further comprising:
controlling, based on the type of the at least one device, a data selection unit of the electronic device to select to transmit data through the first interface or the second interface.

13. The method of claim 12, wherein the first interface and the second interface are each a USB Type-C interface.

14. The method of claim 13, further comprising:
controlling the data selection unit to select to transmit at least one of transmission data, reception data, or side band data with the host through the first interface or the second interface which is coupled with the host.

## Patentansprüche

1. Elektronische Vorrichtung, umfassend:
mindestens zwei Schnittstellen;
eine Schalteinheit (13, 23), die jeweils mit den mindestens zwei Schnittstellen gekoppelt ist und dazu ausgelegt ist, einen Stromversorgungsweg (15) der elektronischen Vorrichtung umzuschalten, wobei der Stromversorgungsweg durch eine der mindestens zwei Schnittstellen bereitgestellt wird; und
ein Steuermodul (14, 24, 44), das jeweils mit den mindestens zwei Schnittstellen und der Schalteinheit gekoppelt ist und dazu ausgelegt ist, einen Typ von mindestens einer mit der elektronischen Vorrichtung gekoppelten Vorrichtung zu erkennen und, basierend auf dem Typ der mindestens einen Vorrichtung, die Schalteinheit zur Umschaltung des Stromversorgungswegs der elektronischen Vorrichtung zu steuern,
wobei die elektronische Vorrichtung mit der mindestens einen Vorrichtung über alle oder einen Teil der mindestens zwei Schnittstellen gekoppelt ist,
wobei die mindestens zwei Schnittstellen eine erste Schnittstelle (11) und eine zweite Schnittstelle (12) umfassen, und
**dadurch gekennzeichnet, dass**:
die elektronische Vorrichtung ferner eine Datenauswahleinheit (47) umfasst, wobei die Datenauswahleinheit jeweils mit der ersten Schnittstelle und der zweiten Schnittstelle gekoppelt ist und eine erste Datenauswahleinheit (471) umfasst; und
das Steuermodul dazu ausgelegt ist, die erste Datenauswahleinheit so zu steuern, dass Audiodaten von einem Host zu einer Audioausgabevorrichtung über die jeweils andere der ersten Schnittstelle und der zweiten Schnittstelle ausgegeben werden, als Reaktion darauf, dass erkannt wird, dass die elektronische Vorrichtung mit der Vorrichtung, die ein Host (1) ist, über eine der ersten Schnittstelle und der zweiten Schnittstelle gekoppelt ist und mit einer weiteren Vorrichtung, die eine Audioausgabevorrichtung ist, über die jeweils andere der ersten Schnittstelle und der zweiten Schnittstelle gekoppelt ist.

2. Elektronische Vorrichtung nach Anspruch 1, wobei die Schalteinheit einen ersten Schalter (231), der mit der ersten Schnittstelle gekoppelt ist, einen zweiten Schalter (232), der mit der zweiten Schnittstelle gekoppelt ist, und einen Kondensator (C), der mit dem ersten Schalter und dem zweiten Schalter gekoppelt ist, umfasst; wobei die erste Schnittstelle über den ersten Schalter mit einer zu versorgenden Schaltung (16) der elektronischen Vorrichtung gekoppelt ist und die zweite Schnittstelle über den zweiten Schalter mit der zu versorgenden Schaltung gekoppelt ist; das Steuermodul dazu ausgelegt ist, basierend auf dem Typ der mindestens einen Vorrichtung, den ersten Schalter oder den zweiten Schalter einzuschalten, um den Stromversorgungsweg der elektronischen Vorrichtung umzuschalten; der Kondensator dazu ausgelegt ist, die elektronische Vorrichtung mit Strom zu versorgen, wenn das Steuermodul den Stromversorgungsweg der elektronischen Vorrichtung umschaltet.

3. Elektronische Vorrichtung nach Anspruch 2, wobei das Steuermodul dazu ausgelegt ist, den ersten Schalter oder den zweiten Schalter, der mit einer der ersten Schnittstelle und der zweiten Schnittstelle gekoppelt ist, einzuschalten, als Reaktion darauf, dass erkannt wird, dass die elektronische Vorrichtung mit der Vorrichtung, die ein Host (1) ist, nur über die eine der ersten Schnittstelle und der zweiten Schnittstelle gekoppelt ist, um dem Host zu ermöglichen, die zu versorgende Schaltung mit Strom zu versorgen.

4. Elektronische Vorrichtung nach Anspruch 3, wobei das Steuermodul ferner dazu ausgelegt ist, den ersten Schalter oder den zweiten Schalter, der mit der jeweils anderen der ersten Schnittstelle und der zweiten Schnittstelle gekoppelt ist, die nicht mit der Vorrichtung gekoppelt ist, die ein Host ist, einzuschalten, als Reaktion darauf, dass erkannt wird, dass die elektronische Vorrichtung mit einer weiteren Vorrichtung über die andere Schnittstelle gekoppelt ist und die weitere Vorrichtung eine Stromversorgungsvorrichtung (2) ist, um der Stromversorgungsvorrichtung zu ermöglichen, die zu versorgende Schaltung über die andere Schnittstelle mit Strom zu versorgen und die durch die Stromversorgungsvorrichtung ausgegebene Strom über die eine der ersten Schnittstelle und der zweiten Schnittstelle an den Host zu liefern.

5. Elektronische Vorrichtung nach Anspruch 1, wobei die Datenauswahleinheit dazu ausgelegt ist, unter Steuerung des Steuermoduls Daten über die erste Schnittstelle oder die zweite Schnittstelle zu übertragen.

6. Elektronische Vorrichtung nach Anspruch 5, wobei die erste Schnittstelle und die zweite Schnittstelle jeweils eine USB-C-Schnittstelle sind.

7. Elektronische Vorrichtung nach Anspruch 6, wobei die Datenauswahleinheit ferner Folgendes umfasst:
eine zweite Datenauswahleinheit (472), die dazu ausgelegt ist, Übertragungsdaten an einer USB-C-Schnittstelle über die erste Schnittstelle oder die zweite Schnittstelle zu übertragen;
eine dritte Datenauswahleinheit (473), die dazu ausgelegt ist, Empfangsdaten an der USB-C-Schnittstelle über die erste Schnittstelle oder die zweite Schnittstelle zu übertragen; und
eine vierte Datenauswahleinheit (474), die dazu ausgelegt ist, Sideband-Daten an der USB-C-Schnittstelle über die erste Schnittstelle oder die zweite Schnittstelle zu übertragen.

8. Elektronische Vorrichtung nach Anspruch 7, wobei die zweite Datenauswahleinheit und die dritte Datenauswahleinheit jeweils ein steuerbarer Datenwähler sind und die vierte Datenauswahleinheit ein steuerbarer Schalter ist.

9. Schnittstellensteuerungsverfahren einer elektronischen Vorrichtung, umfassend:
Erkennen (S502) eines Typs von mindestens einer mit der elektronischen Vorrichtung gekoppelten Vorrichtung; und
Steuern (S504) einer Schalteinheit der elektronischen Vorrichtung zur Umschaltung eines Stromversorgungswegs der elektronischen Vorrichtung, basierend auf dem Typ der mindestens einen Vorrichtung,
wobei die elektronische Vorrichtung mit der mindestens einen Vorrichtung über alle oder einen Teil von mindestens zwei Schnittstellen gekoppelt ist, wobei die mindestens zwei Schnittstellen eine erste Schnittstelle und eine zweite Schnittstelle umfassen, und
**dadurch gekennzeichnet, dass** das Verfahren ferner umfasst:
Steuern einer Datenauswahleinheit der elektronischen Vorrichtung, um die Ausgabe von Audiodaten von einem Host zu einer Audioausgabevorrichtung über die jeweils andere der ersten Schnittstelle und der zweiten Schnittstelle auszuwählen, als Reaktion darauf, dass erkannt wird, dass die elektronische Vorrichtung mit der Vorrichtung, die ein Host (1) ist, über eine der ersten Schnittstelle und der zweiten Schnittstelle gekoppelt ist und mit einer weiteren Vorrichtung, die eine Audioausgabevorrichtung ist, über die jeweils andere der ersten Schnittstelle und der zweiten Schnittstelle gekoppelt ist.

10. Verfahren nach Anspruch 9, wobei das Steuern der Schalteinheit der elektronischen Vorrichtung zur Umschaltung des Stromversorgungswegs der elektronischen Vorrichtung, basierend auf dem Typ der mindestens einen Vorrichtung, umfasst:
Steuern (S5042) der Schalteinheit, um einem Host zu ermöglichen, eine zu versorgende Schaltung mit Strom zu versorgen, als Reaktion darauf, dass erkannt wird, dass die elektronische Vorrichtung mit der Vorrichtung, die ein Host ist, nur über eine der ersten Schnittstelle und der zweiten Schnittstelle gekoppelt ist.

11. Verfahren nach Anspruch 10, wobei das Steuern der Schalteinheit der elektronischen Vorrichtung zur Umschaltung des Stromversorgungswegs der elektronischen Vorrichtung, basierend auf dem Typ der mindestens einen Vorrichtung, ferner umfasst:
Steuern (S5042) der Schalteinheit, um einer Stromversorgungsvorrichtung zu ermöglichen, die zu versorgende Schaltung über die jeweils andere der ersten Schnittstelle und der zweiten Schnittstelle, die nicht mit der Vorrichtung gekoppelt ist, die ein Host ist, mit Strom zu versorgen und der durch die Stromversorgungsvorrichtung ausgegebene Strom über die eine der ersten Schnittstelle und der zweiten Schnittstelle an den Host zu liefern, als Reaktion darauf, dass erkannt wird, dass die elektronische Vorrichtung mit einer weiteren Vorrichtung über die andere Schnittstelle gekoppelt ist und die weitere Vorrichtung eine Stromversorgungsvorrichtung ist.

12. Verfahren nach Anspruch 10 oder 11, ferner umfassend:
Steuern einer Datenauswahleinheit der elektronischen Vorrichtung, basierend auf dem Typ der mindestens einen Vorrichtung, um die Übertragung von Daten über die erste Schnittstelle oder die zweite Schnittstelle auszuwählen.

13. Verfahren nach Anspruch 12, wobei die erste Schnittstelle und die zweite Schnittstelle jeweils eine USB-C-Schnittstelle sind.

14. Verfahren nach Anspruch 13, ferner umfassend:
Steuern der Datenauswahleinheit, um auszuwählen, dass mindestens eines der Übertragungsdaten, Empfangsdaten oder Sideband-Daten mit dem Host über die erste Schnittstelle oder die zweite Schnittstelle, die mit dem Host gekoppelt ist, übertragen wird.

## Revendications

1. Dispositif électronique, comprenant :
au moins deux interfaces ;
une unité de commutation (13, 23) couplée respectivement aux au moins deux interfaces et configurée pour commuter un chemin d'alimentation (15) du dispositif électronique, le chemin d'alimentation étant fourni par l'une des au moins deux interfaces ; et
un module de commande (14, 24, 44) couplé respectivement aux au moins deux interfaces et à l'unité de commutation et configuré pour détecter un type d'au moins un dispositif couplé au dispositif électronique et commander, sur la base du type de l'au moins un dispositif, l'unité de commutation pour qu'elle commute le chemin d'alimentation du dispositif électronique,
le dispositif électronique étant couplé à l'au moins un dispositif par l'intermédiaire de la totalité ou d'une partie des au moins deux interfaces,
les au moins deux interfaces comprenant une première interface (11) et une seconde interface (12), et
le dispositif électronique étant **caractérisé en ce que** :
le dispositif électronique comprend en outre une unité de sélection de données (47), l'unité de sélection de données étant couplée respectivement à la première interface et à la seconde interface et comprenant une première unité de sélection de données (471) ; et
le module de commande est configuré pour commander la première unité de sélection de données pour qu'elle sélectionne de délivrer en sortie des données audio en provenance d'un hôte vers un dispositif de sortie audio par l'intermédiaire de l'autre interface parmi la première interface et la seconde interface, en réponse à la détection du fait que le dispositif électronique est couplé au dispositif, qui est un hôte (1), par l'intermédiaire d'une interface parmi la première interface et la seconde interface et couplé à un autre dispositif, qui est un dispositif de sortie audio, par l'intermédiaire de l'autre interface parmi la première interface et la seconde interface.

2. Dispositif électronique selon la revendication 1, l'unité de commutation comprenant un premier commutateur (231) couplé à la première interface, un second commutateur (232) couplé à la seconde interface, et un condensateur (C) couplé au premier commutateur et au second commutateur ; la première interface étant couplée à un circuit à alimenter (16) du dispositif électronique par l'intermédiaire du premier commutateur, et la seconde interface étant couplée au circuit à alimenter par l'intermédiaire du second commutateur ; le module de commande étant configuré pour commander, sur la base du type de l'au moins un dispositif, le passage à l'état passant du premier commutateur ou du second commutateur pour qu'il commute le chemin d'alimentation du dispositif électronique ; le condensateur étant configuré pour alimenter le dispositif électronique lorsque le module de commande commute le chemin d'alimentation du dispositif électronique.

3. Dispositif électronique selon la revendication 2, le module de commande étant configuré pour commander le passage à l'état passant du premier commutateur ou du second commutateur, qui est couplé à une interface parmi la première interface et la seconde interface, en réponse à la détection du fait que le dispositif électronique est couplé au dispositif, qui est un hôte (1), uniquement par l'intermédiaire de ladite interface parmi la première interface et la seconde interface, pour permettre à l'hôte d'alimenter le circuit à alimenter.

4. Dispositif électronique selon la revendication 3, le module de commande étant en outre configuré pour commander le passage à l'état passant du premier commutateur ou du second commutateur, qui est couplé à l'autre interface, parmi la première interface et la seconde interface, qui n'est pas couplée au dispositif qui est un hôte, en réponse à la détection du fait que le dispositif électronique est couplé à un autre dispositif par l'intermédiaire de l'autre interface et que l'autre dispositif est un dispositif d'alimentation (2), pour permettre au dispositif d'alimentation d'alimenter le circuit à alimenter par l'intermédiaire de l'autre interface et pour permettre à l'alimentation délivrée en sortie par le dispositif d'alimentation d'être fournie à l'hôte par l'intermédiaire de ladite interface parmi la première interface et la seconde interface.

5. Dispositif électronique selon la revendication 1, l'unité de sélection de données étant configurée pour sélectionner d'émettre des données par l'intermédiaire de la première interface ou de la seconde interface sous commande du module de commande.

6. Dispositif électronique selon la revendication 5, la première interface et la seconde interface étant chacune une interface USB de type C.

7. Dispositif électronique selon la revendication 6, l'unité de sélection de données comprenant en outre :
une deuxième unité de sélection de données (472) configurée pour sélectionner d'émettre des données d'émission au niveau d'une interface USB de type C par l'intermédiaire de la première interface ou de la seconde interface ;
une troisième unité de sélection de données (473) configurée pour sélectionner d'émettre des données de réception au niveau de l'interface USB de type C par l'intermédiaire de la première interface ou de la seconde interface ; et
une quatrième unité de sélection de données (474) configurée pour sélectionner d'émettre des données de bande latérale au niveau de l'interface USB de type C par l'intermédiaire de la première interface ou de la seconde interface.

8. Dispositif électronique selon la revendication 7, la deuxième unité de sélection de données et la troisième unité de sélection de données étant chacune un sélecteur de données commandable, et la quatrième unité de sélection de données étant un commutateur commandable.

9. Procédé de commande d'interface d'un dispositif électronique, comprenant les étapes consistant à :
détecter (S502) un type d'au moins un dispositif couplé au dispositif électronique ; et
commander (S504), sur la base du type de l'au moins un dispositif, une unité de commutation du dispositif électronique pour qu'elle commute un chemin d'alimentation du dispositif électronique,
le dispositif électronique étant couplé à l'au moins un dispositif par l'intermédiaire de la totalité ou d'une partie d'au moins deux interfaces, les au moins deux interfaces comprenant une première interface et une seconde interface, et
le procédé étant **caractérisé en ce qu'**il comprend en outre l'étape consistant à :
commander une unité de sélection de données du dispositif électronique pour qu'elle sélectionne de délivrer en sortie des données audio en provenance d'un hôte vers un dispositif de sortie audio par l'intermédiaire de l'autre interface parmi la première interface et la seconde interface, en réponse à la détection du fait que le dispositif électronique est couplé au dispositif, qui est un hôte (1), par l'intermédiaire d'une interface parmi la première interface et la seconde interface et couplé à un autre dispositif, qui est un dispositif de sortie audio, par l'intermédiaire de l'autre interface parmi la première interface et la seconde interface.

10. Procédé selon la revendication 9, la commande, sur la base du type de l'au moins un dispositif, de l'unité de commutation du dispositif électronique pour qu'elle commute le chemin d'alimentation du dispositif électronique comprenant l'étape consistant à :
commander (S5042) l'unité de commutation pour permettre à un hôte d'alimenter un circuit à alimenter, en réponse à la détection du fait que le dispositif électronique est couplé au dispositif, qui est un hôte, uniquement par l'intermédiaire d'une interface parmi la première interface et la seconde interface.

11. Procédé selon la revendication 10, la commande, sur la base du type de l'au moins un dispositif, de l'unité de commutation du dispositif électronique pour qu'elle commute le chemin d'alimentation du dispositif électronique comprenant en outre l'étape consistant à :
commander (S5042) l'unité de commutation pour permettre à un dispositif d'alimentation d'alimenter le circuit à alimenter par l'intermédiaire de l'autre interface, parmi la première interface et la seconde interface, qui n'est pas couplée au dispositif qui est un hôte, et permettre à l'alimentation délivrée en sortie par le dispositif d'alimentation d'être fournie à l'hôte par l'intermédiaire de ladite interface parmi la première interface et la seconde interface, en réponse à la détection du fait que le dispositif électronique est couplé à un autre dispositif par l'intermédiaire de l'autre interface et que l'autre dispositif est un dispositif d'alimentation.

12. Procédé selon la revendication 10 ou 11, comprenant en outre l'étape consistant à :
commander, sur la base du type de l'au moins un dispositif, une unité de sélection de données du dispositif électronique pour qu'elle sélectionne d'émettre des données par l'intermédiaire de la première interface ou de la seconde interface.

13. Procédé selon la revendication 12, la première interface et la seconde interface étant chacune une interface USB de type C.

14. Procédé selon la revendication 13, comprenant en outre l'étape consistant à :
commander l'unité de sélection des données pour qu'elle sélectionne d'émettre au moins un type de données parmi des données d'émission, des données de réception et des données de bande latérale vers l'hôte par l'intermédiaire de la première interface ou de la seconde interface qui est couplée à l'hôte.
